# EUROPÄISCHE PATENTANMELDUNG

(11) **EP 1 380 399 A1**
(43) Veröffentlichungstag der Anmeldung: **14.01.2004**
(21) Anmeldenummer: 03014672.4
(22) Anmeldetag: 27.06.2003
(51) Int. Cl.: B29C 45/26, B29C 45/17, B29C 33/30

(54) **Formwerkzeug für Kunststoff-Gehäuseteile**

(30) Priorität: 11.07.2002 DE 10231551
(71) Anmelder: Balda Werkzeug- und Vorrichtungsbau GmbH, 32549 Bad Oeynhausen (DE)
(72) Erfinder: Drees, Guido, 32312 Lübbecke (DE)
(74) Vertreter: Pott, Ulrich

(57) **Zusammenfassung**

Die Anmeldung bezieht sich auf ein Formwerkzeug zur Herstellung von Kunststoff-Gehäuseteilen für elektrische Geräte, bestehend aus einem Rahmen und zumindest einer im Rahmen angeordneten Kavität.

Um einen modularen Aufbau mit hoher Flexibilität hinsichtlich der Austauschbarkeit und Verbaubarkeit der Kavitäten in unterschiedlichen Verarbeitungsmaschinen zu ermöglichen, wird vorgeschlagen, Rahmen und Kavität (4) lösbar auf einem Werkzeugaufbau (2) zu befestigen, wobei der Rahmen aus mehreren Einzelbauteilen (20) gebildet ist, von denen jeweils eine Seitenfläche an den Längs- oder Querseitenflächen der Kavität (4) anliegt, und Einzelbauteile (20) und Kavität (4) Ausnehmungen (28) aufweisen, deren Seitenwände plan an den Seitenflächen von Kulissensteinen (21) anliegen, die lösbar mit dem Werkzeugaufbau (2) verbunden sind.

## Beschreibung

Die vorliegende Erfindung bezieht sich auf ein Formwerkzeug zur Herstellung von Kunststoff-Gehäuseteilen für elektrische Geräte, bestehend aus einem Rahmen und zumindest einer in dem Rahmen angeordneten Kavität.

Die Erfindung bezieht sich außerdem auf ein Verfahren zur Herstellung eines Formwerkzeuges für Kunststoff-Gehäuseteile.

Für die Herstellung von Kunststoff-Gehäuseteilen für elektrische Geräte gelten besondere Anforderungen. Da die Gehäuseteile für hochwertige technische Geräte verwendet werden, müssen Gehäuseteile einen sauber verarbeiteten und optisch einwandfreien Eindruck machen. Die elektrischen bzw. elektronischen Geräte weisen in der Regel eine Vielzahl von Anzeigen und Bedienfunktionen auf, wofür in den Kunststoffgehäuseteilen entsprechende Öffnungen vorgesehen sind. Die Öffnungen müssen mit einem hohen Maß an Präzision gegossen werden, da ansonsten entweder die Montage der Gehäuseteile auf den Elektronikbauteilen unmöglich ist oder schlechte Passungen die Funktion oder den Qualitätseindruck beeinträchtigen. Die Gehäuseteile weisen zudem schwierige Geometrien mit gewölbten und gebogenen Oberflächen und Hinterschnitten auf, die zusätzliche Ansprüche an die Präzision des Herstellungsverfahrens stellen.

Um den hohen Qualitätsanforderungen an die herzustellenden Gehäuseteile gerecht zu werden, ist es aus dem Stand der Technik bekannt, jeweils ein Werkzeug für ein Bauteil herzustellen. Das Werkzeug wird gefertigt aus einem einstückigen Rahmen, in den eine oder mehrere Kavitäten eingebaut werden. Das fertige Modul wird sodann in eine Spritzgießmaschine eingesetzt, mit der dann die Gehäuseteile herstellbar sind. Dieses Herstellverfahren für die Formwerkzeuge hat sich als nachteilig erwiesen. So erfordert beispielsweise der Prozeß für die Herstellung des gesamten Formwerkzeuges - also Kavität und Rahmen einschließlich der erforderlichen Ausstoßer und Innen- und Außenschieber - einen hohen Zeitaufwand, der den Fertigungsanlauf verzögert. Zudem ist das eine hergestellte Formwerkzeug nicht verwendbar, um bei steigenden Fertigungsstückzahlen des Gehäusebauteils in zweifach, vierfach oder sonstigen Werkzeugaufbauten weiter verwendet zu werden. Hierfür war jeweils entweder ein neuer Herstellungsprozeß erforderlich, da das erste erstellte Werkzeug überhaupt nicht mehr verwendet werden kann, oder der Umbau erforderte einen ganz erheblichen Aufwand. Im Falle von Konstruktionsänderungen des Gehäuseteiles, Fertigungsverlagerungen und Werkzeugwechseln haben sich die herkömmlichen Formwerkzeuge als schwer handhabbar erwiesen. Eine Anpassung oder Umrüstung der herkömmlichen Werkzeuge ist nur mit hohem Aufwand möglich. Da die Bauteile des Formwerkzeugs nicht oder mit kaum vertretbarem wirtschaftlichem Aufwand wiederverwendbar sind, muss jeweils wieder mit hohem Aufwand ein komplett neues Formwerkzeug hergestellt werden, wenn ein neues Gehäuseteil in die Produktion gehen oder die Produktion mittels eines Mehrfachwerkzeugs aufgestockt werden soll. Das System der Werkzeugherstellung ist also insgesamt zu wenig flexibel und zu aufwendig.

Es ist die Aufgabe der vorliegenden Erfindung, den Aufwand bei der Herstellung von Formwerkzeugen zu verringern und die Fertigungsflexibilität zu erhöhen.

Die Aufgabe wird gelöst durch ein Formwerkzeug gemäß den kennzeichnenden Merkmalen der Ansprüche 1, 7 und 11 bzw. durch das Verfahren gemäß Anspruch 15.

Bei einer Umsetzung des vorgeschlagenen Modulkonzeptes für die Werkzeugherstellung können einzelne Kavitäten einem Werkzeugaufbau entnommen und in anderen Werkzeugaufbauten verwendet werden. So ist es möglich, eine Produktion erst mit einer einzigen Kavität anzufahren, um dann bei einer Steigerung der Absatzmengen eine zweite Kavität herzustellen und beide Kavitäten in einem Werkzeug zu verbauen. Die Herstellungszeit für die Herstellung des neuen Werkzeuges ist extrem verkürzt, da nur die zweite Kavität hergestellt werden muß. Die erste Kavität, die Einzelbauteile und der Werkzeugaufbau sind als Baukastenelemente vorhanden und müssen nicht extra angefertigt werden. Dadurch kann die Lagerhaltung für Werkzeugrohlinge und Fertigteile deutlich reduziert werden, und der Änderungsaufwand für das Werkzeug wird deutlich reduziert, wenn bei einer Änderung in der Formgebung des herzustellenden Gehäuseteiles nur eine neue Kavität eingesetzt werden muß. Werkzeugaufbauten und Einzelbauteile des Rahmens sind prinzipiell wiederverwendbar und beschleunigen die Herstellung eines neuen Werkzeuges für neue Gehäuseformteile. Bei einer Fertigung von Gehäuseteilen an mehreren Fertigungsstandorten können die Produktionsprozesse flexibel an den lokalen Fertigungsbedarf angepaßt werden, da es genügt, nur die Kavitäten zwischen einzelnen Fertigungsstandorten auszutauschen. Anders als komplette Formwerkzeuge können Kavitäten als Postpaket per Expreßversand verschickt werden. Aufgrund der hohen Flexibilität auf der Werkzeugseite können Kunden, die Gehäuseteile fertigen lassen wollen, kostengünstige Herstellkosten geboten werden, die weitgehend unabhängig sind von schwer kalkulierbaren Stückzahlgarantien.

Weitere vorteilhafte Ausgestaltungen ergeben sich aus den Merkmalen der Unteransprüche und aus den dargestellten Ausführungsbeispielen. Es zeigen:
- Fig. 1: einen Querschnitt durch einen Ausschnitt aus einem Formwerkzeug,
- Fig. 2: einen weiteren Querschnitt durch ein Formwerkzeug,
- Fig. 3: eine Detailansicht einer Kavität,
- Fig. 4: eine perspektivische Ansicht eines Formwerkzeugs der Auswerfer-Seite,
- Fig. 5: eine perspektivische Ansicht eines Formwerkzeugs auf der Heissen Seite.

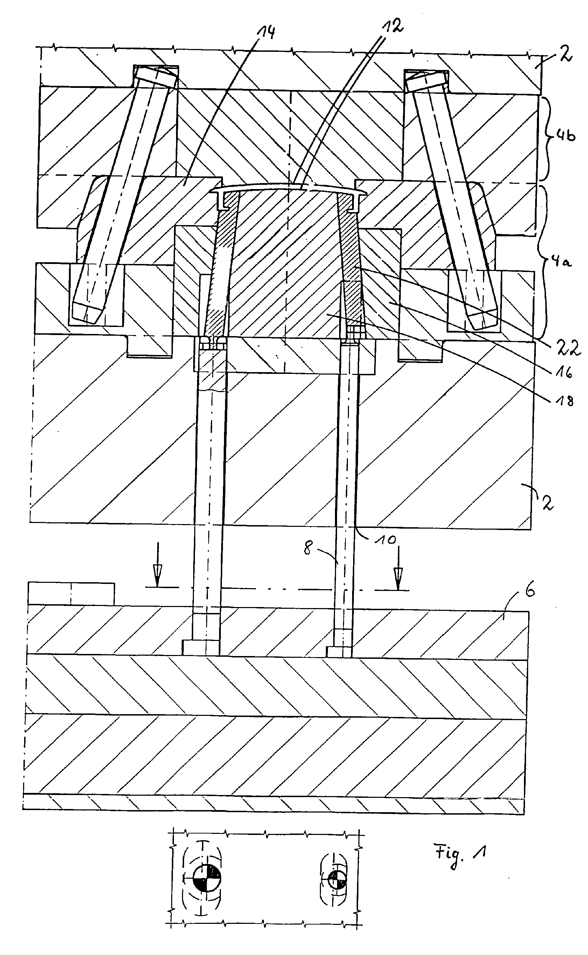

In Figur 1 ist ein Querschnitt durch ein komplettes Formwerkzeug zu sehen. Auf einem Werkzeugaufbau 2 ist jeweils eine Kavität 4 aufgebaut, und zwar die Kavität 4a auf der Auswerfer-Seite und die Kavitäten 4b auf der Heissen Seite. Zum Werkzeugaufbau 2 auf der Auswerfer-Seite gehört eine Auswerferplatte 6 mit Auswerfern 8. In dem Werkzeugaufbau 2 auf der Auswerfer-Seite sind Kanäle 10 für die Auswerfer vorgesehen. Die konturbildenden Formflächen 12 der Kavitäten 4a, 4b bilden zwischen sich einen Hohlraum, der zur Herstellung eines Kunststoff-Gehäuseteiles mit Kunststoff ausgespritzt werden muß. Es ist sehr gut die schwierige Kontur des Gehäusebauteils mit dem Hinterschnitt erkennbar. Wenn der Spritzprozeß abgeschlossen ist, werden die Kavitäten 4a, 4b auseinandergefahren. Dabei werden die Außenschieber 14 von den schräg dargestellten Führungsstiften nach außen bewegt. Gleichzeitig werden die Auswerfer 8 von der Auswerferplatte 6 in eine Auswerfposition gefahren, wo die Innenschieber 22 schließlich nach innen wegklappen und dadurch das fertige Kunststoff-Gehäuseteil von den Ausschiebern abgenommen werden kann. Die Kavität 4 ist im wesentlichen gebildet durch den Einsatz 16, in den der Kern 18 mit der konturbildenden Formfläche 12 eingelegt ist.

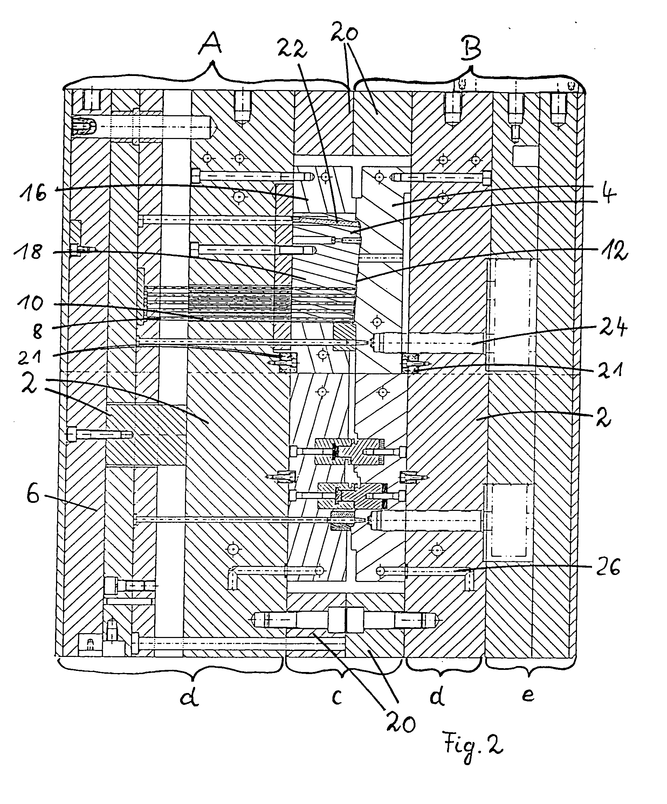

In Figur 2 ist ein Querschnitt durch ein komplettes Formwerkzeug zu sehen. Zu unterscheiden ist die Auswerferseite A und die Heiße Seite B. Bei einem zusammengefahrenen Werkzeug liegen die Aufbauten der Kavität sowie die Einzelbauteile 20 im Bereich c einander gegenüber. Die Kavitäten 4 und die Einzelbauteile 20 sind befestigt auf jeweils einem Werkzeugaufbau 2, der im Bereich d liegt. Die Heiße Seite B weist zusätzlich noch ein Heißkanalsystem im Bereich e auf. Die Kavitäten 4 sind jeweils festgelegt durch Kulissensteine 21. Anstelle von Kulissensteinen 21 kann eines der Bauteile Kavität 4, Einzelbauteile 20 oder Werkzeugaufbau 2 eine Ausformung aufweisen, wie beispielsweise einen Würfel oder Quader, der über die sonstigen Stoßflächen hinausragt und der so positioniert ist, dass er im Rahmen des Baukastenkonzepts in entsprechende Aufnahmen 28 von benachbart liegenden Bauteilen hineinragt. Gut sichtbar ist auch die Anordnung von Auswerfern 8 auf der Auswerferplatte 6, die jeweils in den Kanal 10 für die Auswerfer hineinragen. Auch die Lage des Innenschiebers 22 ist gut sichtbar.

Der erhitzte Kunststoff wird durch den Heißkanal 24 in den Hohlraum eingespritzt, der umfangsseitig durch die konturbildenden Formflächen 12 gebildet ist. Außerdem sind Kanäle 26 für die Heizung/Kühlung des Werkzeuges dargestellt, die sich vom Werkzeugaufbau 2 in eine Kavität 4 hineinerstrecken.

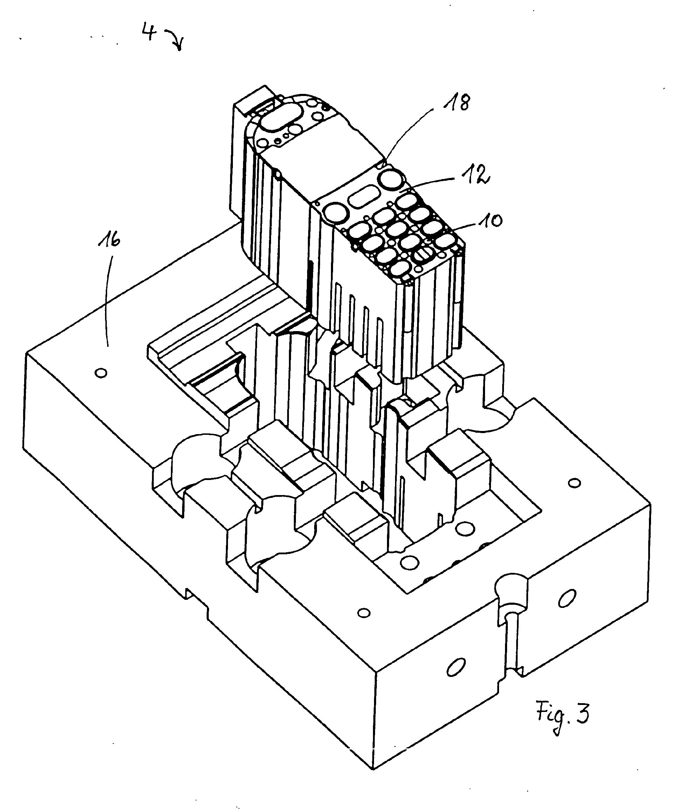

Figur 3 zeigt eine perspektivische Darstellung einer Kavität 4. Aus Vereinfachungsgründen sind die Auswerfer 8 und Außenschieber 14 nicht dargestellt. Gut erkennbar sind jedoch die Kanäle 10 für die Auswerfer, die in der konturbildenden Formfläche 12 münden und sich durch den Kern 18 hindurcherstrecken. Der Einsatz 16 weist Ausnehmungen 28 zur Aufnahme von Antriebselementen zur Steuerung von Schiebern auf.

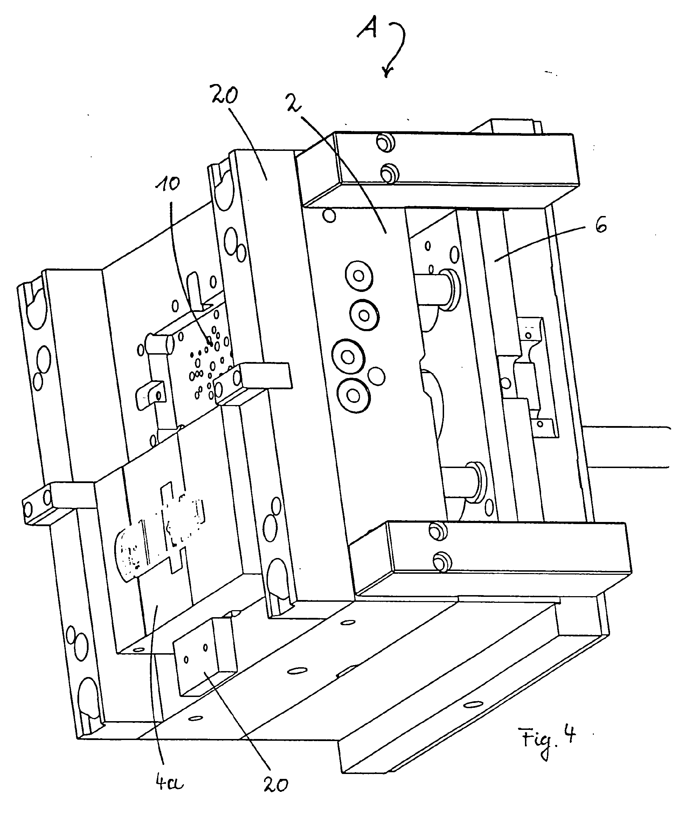

In Figur 4 ist ein Formwerkzeug der Auswerferseite zu sehen. Beispielhaft ist eine Kavität 4a gezeigt, die auf dem Werkzeugaufbau 2 befestigt ist. Daneben ist eine Vertiefung im Werkzeugaufbau 2 zu sehen, in den eine weitere Kavität 4a einsetzbar ist. Gut erkennbar ist das Lochbild mit Mündungslöchern der Kanäle 10 für die Auswerfer, aber auch für Kühl- bzw. Heizkanäle, Innenschieber und andere Elemente. Die Kavität 4a ist in ihrer Lage festgelegt durch die seitlich angrenzenden Einzelbauteile 20, die mit ihren Seitenflächen plan an den Seitenflächen der Kavität 4a anliegen. An das gezeigte Zweifach-Werkzeug läßt sich ein identisch aufgebautes weiteres Zweifach-Werkzeug anlegen, so daß ein Vierfach-Werkzeug entsteht. Eine lösbar mit dem Werkzeugaufbau 2 verbundene Kavität 4a kann leicht von dem Werkzeugaufbau abgelöst und in ein anderes Formwerkzeug eingebaut werden, das ein entsprechendes Lochbild aufweist, das zu der Kavität 4a paßt. Die nach dem Baukastenprinzip aufgebauten Formwerkzeuge können auch als Einfach-, Zweifach- oder Vierfachwerkzeug in Formwerkzeugen für Spritzmaschinen mit Würfeltechnik, Drehwerkzeugtechnik oder mit Etagenwerkzeugen eingesetzt werden. Die Technik läßt sich auch einsetzen, wenn ein Kuststoff-Gehäuseteil aus mehreren Kunststoffen erzeugt wird und ein mehrfacher Spritzvorgang zur Herstellung eines fertigen Gehäuseteiles erforderlich ist.

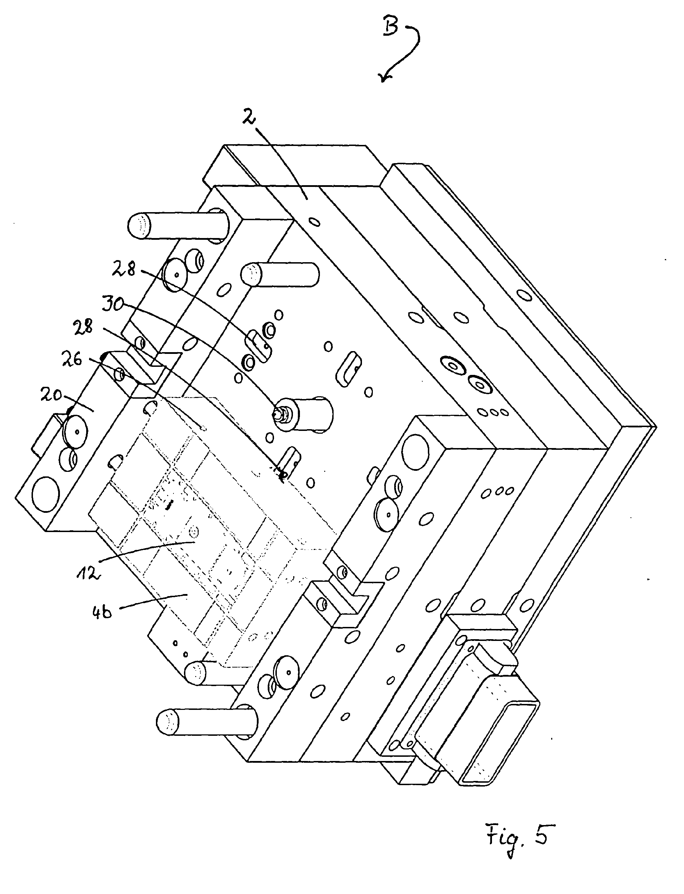

In Figur 5 ist ein Formwerkzeug dargestellt, das auf der Heissen Seite eingesetzt ist. Gut erkennbar ist die Düse 30, auf die noch eine Kavität 4b aufgesetzt werden muß. Auf der linken Seite ist die fertige Montageposition einer Kavität 4b zu sehen. Gut erkennbar sind die Ausnehmungen 28 in der Oberfläche des Werkzeugaufbaus 2 und auf der dem Werkzeugaufbau 2 zugewandten Außenfläche der Kavität 4b.

Das erfindungsgemäße Formwerkzeug kann auf einfache Art und Weise montiert werden. Für ein fertiges Werkzeug muß zunächst nur eine Kavität 4a, 4b ausgeformt und gehärtet werden. Sobald diese Bauteile vorliegen, brauchen die Kavitäten 4a, 4b nur auf dem jeweiligen Werkzeugaufbau 2 festgeschraubt oder auf sonstige Weise befestigt werden. Außenseitig werden die Kavitäten 4 von Einzelbauteilen 20 des Rahmens begrenzt. Die Einzelbauteile 20 sowie der Werkzeugaufbau 2 können genormte Standardbauteile sein, die auf Vorrat bereitliegen und leicht austauschbar sind. Die Verbindung zwischen den einzelnen Komponenten oder Modulen erfolgt bevorzugt durch Verschraubungen, kann jedoch auch auf andere lösbare Art und Weise ausgestaltet sein.

Im Ausführungsbeispiel werden die Formwerkzeuge zur Herstellung von Kunststoff-Gehäuseteilen für Handys benötigt. Die Kavitätengrößen liegen in einem Bereich von 130 x 200 mm bzw. 100 x 200 mm. Für andere Gehäuseabmessungen können die Maße der Kavitäten entsprechend angepaßt werden. Gleiches gilt für die Positionierung von Innen- und Außenschiebern sowie der Auswerfer. Da die Abmessungen typischer elektronischer Geräte wie Handys, CD-Player, schnurlose Telefone, Autoradios, Uhren, tragbaren Kleincomputern und ähnlicher Geräte unabhängig vom Hersteller häufig nahezu identisch sind, können die Werkzeugaufbauten mit den Aufnahmeräumen für Kavitäten mit bestimmten Abmessungen weiter verwendet werden, wenn neue Kavitäten in Formwerkzeugen zur Herstellung von Gehäuseteilen für andere Geräte - unter Umständen sogar für andere Auftraggeber - produziert werden. Gleiches gilt für die Einzelbauteile 20 des Rahmens, die ebenfalls wiederverwendbar sind.

## Patentansprüche

1. Formwerkzeug zur Herstellung von Kunststoff-Gehäuseteilen für elektrische Geräte, bestehend aus einem Rahmen und zumindest einer im Rahmen angeordneten Kavität (4), **dadurch gekennzeichnet, daß** Rahmen und Kavität (4) lösbar auf einem Werkzeugaufbau (2) befestigt sind, wobei der Rahmen aus mehreren Einzelbauteilen (20) gebildet ist, von denen jeweils eine Seitenfläche an den Längs- oder Querseitenflächen der Kavität (4) anliegt, und Einzelbauteile (20) und Kavität (4) Ausnehmungen (28) aufweisen, deren Seitenwände plan an den Seitenflächen von Kulissensteinen (21) anliegen, die lösbar mit dem Werkzeugaufbau (2) verbunden sind.

2. Formwerkzeug nach Anspruch 1, **dadurch gekennzeichnet, daß** die Ausnehmungen (28) in den Einzelbauteilen (20) und der Kavität (4) so benachbart zueinander liegen, daß benachbarte Ausnehmungen (28) einen gemeinsamen Kulissenstein (21) aufnehmen.

3. Formwerkzeug nach Anspruch 1 oder 2, **dadurch gekennzeichnet, daß** der Kulissenstein (21) in einer Ausnehmung (28) des Werkzeugaufbaus (2) fixiert ist, deren Seitenflächen plan an den Seitenflächen des Kulissensteins (21) anliegen.

4. Formwerkzeug nach einem der vorhergehenden Ansprüche, **dadurch gekennzeichnet, daß** die Ausnehmung (28) im Werkzeugaufbau (2) so positioniert ist, daß der in der Ausnehmung (28) fixierte Kulissenstein (21) mit seinen Seitenflächen in eine Ausnehmung (28) in der Kavität (4) und einem Einzelbauteil (20) hineinragt.

5. Formwerkzeug nach einem der vorhergehenden Ansprüche, **dadurch gekennzeichnet, daß** die Kavität (4), ein Einzelbauteil oder der Werkzeugaufbau (2) eine Ausformung aufweist, die über die planen Stoßflächen zu den anderen Bauteilen (2, 4, 20) hinausragt und mit seinen Oberflächen in Ausnehmungen (28) benachbarter Bauteile (2, 4, 20) hineinragt, deren Oberflächen plan auf den Oberflächen der Ausnehmung (28) aufliegen.

6. Formwerkzeug nach einem der vorhergehenden Ansprüche, **dadurch gekennzeichnet, daß** der Kulissenstein (21) und/oder die Ausnehmungen (28) gehärtete Oberflächen aufweisen.

7. Formwerkzeug zur Herstellung von Kunststoff-Gehäuseteilen für elektrische Geräte, insbesondere nach einem der Ansprüche 1 bis 6, bestehend aus einem Rahmen und mindestens einer im Rahmen angeordneten Kavität (4), **dadurch gekennzeichnet, daß** die Kavität (4) und die Einzelbauteile (20) des Rahmens lösbar auf dem Werkzeugaufbau (2) befestigt sind und die Abmessungen der Kavität (4), der Einzelbauteile (20) und des Werkzeugaufbaus (2) so aufeinander abgestimmt sind, daß Kavität (4) und die Einzelbauteile (20) in einem Einfach-, Zweifach- oder Vierfachwerkzeug oder sonstigem Mehrfachwerkzeug identisch verbaubar sind.

8. Formwerkzeug nach Anspruch 7, **dadurch gekennzeichnet, daß** entweder die Länge der Seitenflächen der an der Längsseite der Kavität (4) eingebauten Einzelbauteile (20) der Länge der Kavität (4) oder die Länge der Seitenflächen der an der Querseite der Kavität (4) eingebauten Einzelbauteile (20) der Breite der Kavität (4) entspricht.

9. Formwerkzeug nach einem der Ansprüche 7 oder 8, **dadurch gekennzeichnet, daß** die Lochbilder der Kavität (4), der Einzelbauteile (20) und des Werkzeugaufbaus (2) für Auswerfer, Düsen, Schieber und/oder Heiz- bzw. Kühlkanäle (26) einander an den jeweiligen Berührungsflächen entsprechen.

10. Formwerkzeug nach einem der vorhergehenden Ansprüche, **dadurch gekennzeichnet, daß** nach dem Abbau von einer Kavität (4) eine andere Kavität (4) auf dem Werkzeugaufbau (2) lösbar befestigbar ist, die eine gleiche oder andere Ausformung des Werkzeugkerns (18) aufweist, wobei die einander zugewandten Lochbilder des Werkzeugaufbaus (2) und der Kavität (4) für Auswerfer (8), Düsen (30), Schieber (14) und/oder Heiz- bzw. Kühlkanäle (26) einander entsprechen.

11. Formwerkzeug zur Herstellung von Kunststoffgehäuseteilen für elektrische Geräte, insbesondere nach einem der Ansprüche 1 bis 11, bestehend aus einem Rahmen und mindestens einer im Rahmen angeordneten Kavität (4) und einem Werkzeugaufbau (2), **dadurch gekennzeichnet, daß** die Bauteile der Kavität (4), des Werkzeugaufbaus (2) und der Einzelbauteile (20) lösbar miteinander verbunden sind und jedes Bauteil (2, 4, 20) in einer Kombination mit anderen Bauteilen (2, 4, 20), die die gleiche bauteilspezifische Form aufweisen, zu einem neuen Werkzeug verbaubar ist.

12. Formwerkzeug nach einem der vorhergehenden Ansprüche, **dadurch gekennzeichnet, daß** das Werkzeug auf der Auswerferseite im wesentlichen gebildet ist durch die Bauteile Kavität (4), Einzelbauteile (20) des Rahmens und Werkzeugaufbau (2), wobei die Kavität (4) die konturbildende Formfläche (12), Ausnehmungen (28) für Auswerfer (8) und Schieber (14) sowie Kanalbohrungen (26) für Heiz- bzw. Kühlflüssigkeit aufweist, die Einzelbauteile (20) des Rahmens Anlageflächen zur Anlage des Einzelbauteils an die Kavität (4) aufweisen und der Werkzeugaufbau (2) Vorrichtungen zur Befestigung von Kavität (4) und Einzelbauteilen (20) sowie ein Lochbild aufweist, das den Durchtritt der Schieber (14) und Auswerfer (8) in die Kavität (4) ermöglicht.

13. Formwerkzeug nach einem der vorhergehenden Ansprüche, **dadurch gekennzeichnet, daß** das Werkzeug auf der Heissen Seite im wesentlichen gebildet ist durch die Module Kavität (4), Einzelbauteile (20) des Rahmens und Werkzeugaufbau (2), wobei die Kavität (4) eine konturbildende Formfläche (12), Ausnehmungen (28) für Schieber (14) und Düsen (30) sowie Kanalbohrungen (26) für Heiz- bzw. Kühlflüssigkeit aufweist, die Einzelbauteile (20) des Rahmens Anlageflächen zur Anlage des Einzelbauteils an die Kavität (4) aufweisen und der Werkzeugaufbau (2) Vorrichtungen zur Befestigung von Kavität (4) und Einzelbauteilen (20) sowie ein Lochbild aufweist, das den Durchtritt der Düsen (30) in die Kavität (4) ermöglicht.

14. Formwerkzeug nach einem der vorhergehenden Ansprüche, **dadurch gekennzeichnet, daß** das Formwerkzeug insgesamt aus einem Formwerkzeugteil auf der Auswerferseite und aus einem Formwerkzeugteil auf der Heissen Seite gebildet ist.

15. Verfahren zur Herstellung eines Formwerkzeugs für Kunststoff-Gehäuseteile, insbesondere zur Herstellung eines Formwerkzeugs nach einem der Ansprüche 1 bis 14, **dadurch gekennzeichnet, daß** zumindest eine Kavität (4) und Einzelbauteile (20) des Rahmens als Einzelkomponenten auf einem Werkzeugaufbau (2) lösbar befestigt werden.
